## Europäisches Patentamt
## European Patent Office
## Office européen des brevets

(11) Publication number: **0 196 142 B1**

(12) **EUROPEAN PATENT SPECIFICATION**

(45) Date of publication of patent specification: **07.02.90**

(51) Int. Cl.⁵: **F 24 J 2/00**

(21) Application number: **86200492.6**

(22) Date of filing: **21.03.86**

(54) Collector for collecting solar radiation.

(30) Priority: **21.03.85 NL 8500830**

(73) Proprietor: **van Heel, Joannes Marie**
**Kreitenborg 17**
**NL-4761 ST Zevenbergen (NL)**

(43) Date of publication of application:
**01.10.86 Bulletin 86/40**

(72) Inventor: **van Heel, Joannes Marie**
**Kreitenborg 17**
**NL-4761 ST Zevenbergen (NL)**

(45) Publication of the grant of the patent:
**07.02.90 Bulletin 90/06**

(74) Representative: **Smulders, Theodorus A.H.J., Ir.**
**et al**
**Vereenigde Octrooibureaux Nieuwe Parklaan**
**107**
**NL-2587 BP 's-Gravenhage (NL)**

(84) Designated Contracting States:
**BE DE FR NL**

(56) References cited:
**DE-A-3 041 236**
**DE-A-3 314 637**
**DE-A-3 416 194**
**FR-A- 867 058**
**FR-A-2 137 146**
**US-A-3 102 532**
**US-A-4 056 405**
**US-A-4 257 396**
**US-A-4 387 703**
**US-A-4 413 157**

**"Solar energy conversion" by Dixon/Leslie, 1978,**
**page 383**

Courier Press, Leamington Spa, England.

## Description

This invention relates to a collector for collecting solar radiation, comprising a solar radiation absorber plate, a heat collecting carrier plate which is in heat conducting connection with the absorber plate and which is spaced apart from the absorber plate by means of an intermediate layer, and means for discharging heat from the carrier plate.

A collector of this type is known and is disclosed in US-A-4,056,405. The collector disclosed in said publication in particular comprises an absorber plate consisting of spaced apart photovoltaic solar cells. The current invention, however, is also related to collectors in which the absorber plate is a black or spectroselective absorber.

In the collector according to the reference cited the photovoltaic solar cells are combined with a heat collecting and discharging element. In the construction disclosed in the reference the photovoltaic solar cells are more or less firmly connected with the heat collecting and discharging carrier plate, which carrier plate itself is the top wall of an conduit for water or air, by means of a layer or cushion of a resilient resinous material. Thus the absorber plate is adhesively connected to the carrier plate. A coating of silicon rubber or similar material is used to encapsulate the photovoltaic cells and resinous cushions. Thus a one piece structure comprising absorber plate, intermediate layer and carrier plate results. The service life of such a construction is limited because of the frequent changes in temperature resulting in that the heat conducting connection will expand and shrink, as fatigue will at last occur in the connecting material.

It is an onject of the invention to provide a collector in which the above-described disadvantage does not or hardly occur.

It is another object of the present invention to provide a collector so constructed that, if desired, both electricity and heat can be generated at a high efficiency while the cost is low, the construction being highly reliable, having a long service life and requiring no maintenance.

It is another object of the invention to provide liquid and air collectors in which different absorbers can be used with no modifications being required to the basic construction of the collector. This is especially important in mass production.

The above objects are achieved with a collector in which the intermediate layer forming the heat conducting connection between the absorber plate and the carrier plate is formed by an elastic and heat conducting construction consisting of metal springs or metal wool, being moveably placed between the absorber plate and the carrier plate, whereas means are provided for holding together the absorber plate, the intermediate construction and the carrier plate and thereby fixing the intermediate construction in place in tight contact with the absorber plate and the carrier plate. Such is appropriately effected by using a carrier plate in the form of strips, said carrier plate comprising, or being provided with, heat discharging means and being in the shape of a container containing photovoltaic solar cells or absorbers which are connected to the heat discharging carrier by means of a movable, elastic and heat conducting construction. Each change of shape owing to changes in temperature can be compensated by this heat conducting construction so that there is maintained a proper heat conducting contact with the heat discharging carrier plate.

The material eligible for this movable, elastic and heat conducting construction is, as mentioned, metal springs or metal wool, which are or is held tightly between the photovoltaic solar cells or differently shaped absorber plate and the heat discharging container. The metal springs may be used in all forms, e.g., in the form of a plate, ring, coil and the like. Plate-shaped metal springs are preferred because of low cost of production and easy assemblage. Metal wool may consist of, e.g., wool of aluminium, steel, copper and the like, and any appropriate form is possible.

The heat collecting and discharging carrier plate is made of, e.g., metal such as aluminium, copper, steel and the like. Although hereinbefore the term carrier plate has been used this is meant to include a carrier having a plate form, a cast form or the form of extruded profiles.

The photovoltaic solar cells or absorbers used in the collector are secured to the heat discharging carrier by means of a sliding (i.e. not fixed) connection. Material stresses owing to changes in temperature, because dissimilar materials are used, are prevented by this connecting method.

A significant feature of this heat conducting construction, as compared with similar, already known constructions, is that it is highly reliable and has a long service life, that no maintenance is required, and that the cost is low and no fatigue of the heat conducting material will occur. The construction is suited for mass production.

For discharging heat from the heat discharging container liquid or air may be used as a heat transport means. The heat discharging carrier plates are provided for such purposes with, e.g., single or multiple liquid tubes or with single or multiple air ducts.

From a viewpoint of cost and efficiency the heat discharging carriers may be applied in the form of strips having a width of approximately 200 mm and a length of approximately 2500 mm. These measurements are only given by way of example.

The equal heat discharging strips can be assembled to larger units and coated at the rear with a heat insulating material.

In case of liquid or air collectors, to prevent heat losses, the collector construction can be covered at the front, i.e. at the surface facing the sun, with single or double glass.

The invention will be elucidated with reference to the drawing, in which:

Fig. 1 is a cross-sectional view of an embodiment of the collector according to the invention;

Fig. 2 shows a detail of the embodiment depicted in Fig. 1;

Fig. 3 shows a detail of the specifically modified embodiment depicted in Fig. 1;

Fig. 4 is a cross-sectional view of a part of another embodiment of the device according to the invention; and

Fig. 5 is a cross-sectional view of yet another embodiment of the device according to the invention.

In the Figures identical parts are designated by identical reference numerals.

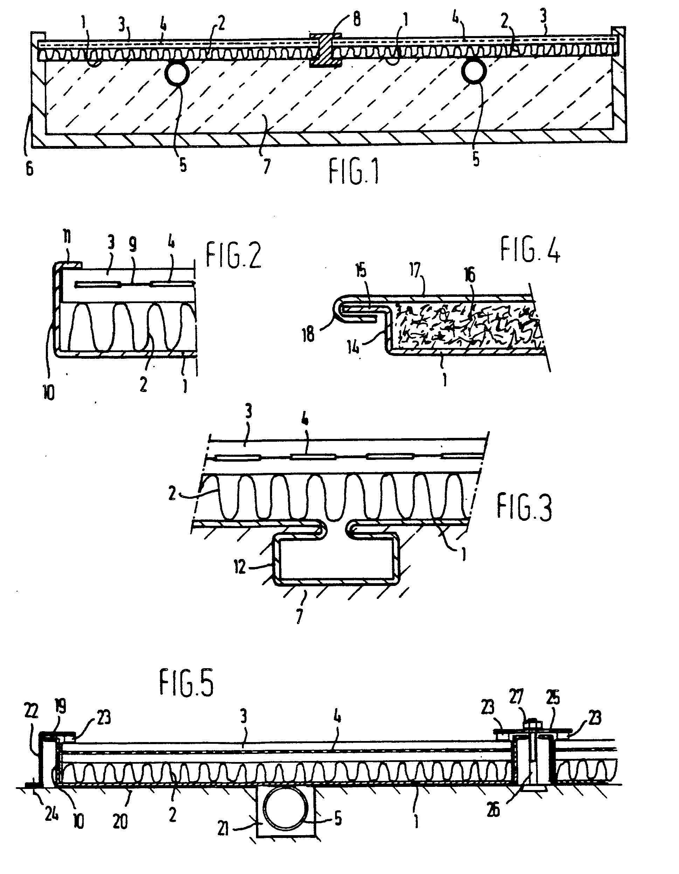

The embodiment of the collector according to the invention shown in Figs. 1 and 2 comprises a heat conducting carrier 1 which is basically in the shape of a plate of metal, e.g., aluminium or another material properly conducting heat. A useful thickness is, e.g., 1 mm. Superposed on the carrier 1 is the spring plate 2, e.g., made of copper having an appropriate thickness, e.g., 2-3 mm. By thickness is meant here the distance between the upper and the lower surface of the "ridges" formed by the springs. The copper layer of the spring plate itself is much smaller in thickness, e.g., a few tenths of a millimeter.

Superposed on the spring plate 2 is the absorber plate, in the embodiment shown consisting of the thin glass plate 3, the interior of which contains the photovoltaic solar cells 4. The glass plate between the solar cells 4 and the outer surface of plate 3 is small in thickness, e.g., 1-1.5 mm, so that the plate has little resistance to heat transport. The solar cells 4 may also be surrounded by appropriate electrically insulating plastic material, instead of by glass. The solar cells 4 may be interconnected by appropriate electric lines 9, the current generated in the cells being discharged via lines, not shown, extending to the exterior of glass plate 3.

Solar radiation collected by plate 3, which is not spent by the photovoltaic solar cells 4, is passed as heat via the elastic construction 2 to the carrier 1 serving to discharge heat. For this purpose the plate 1 is firmly connected with an appropriate tube 5, through which liquid can be passed. The liquid tube 5 has a diameter of, e.g., 15 mm. Of course, more than one liquid tube can be used for each carrier plate 1.

In the embodiment shown the glass plate 3 with solar cells 4, the spring plate 2 and the carrier 1 of the collector according to the invention are held tightly together which is effected by flanging the edges 10 of plate 1, so that, in a sense, a container is formed containing the spring plate 2 and the glass plate 3, and by folding the end 11 of side edge 10 around the glass plate 3, as shown in Fig. 2. Thus a compact collector package is formed. The collector package is contained (Fig. 1) together with a second package in an appropriate receptacle 6 filled with heat insulating material 7, which material may consist of plates, flakes, granules or the like of rock wool, glass wool or other heat insulating material. As shown in Fig. 1, the collector packages are accommodated in a groove in the vertical wall of receptacle 6, on the one hand, and in a groove of an appropriate coupling element 8, on the other hand.

Fig. 3 shows a detail of a modified embodiment of the collector shown in Figs. 1 and 2. This modification consists in that not a liquid tube is connected with the carrier 1, but that the carrier 1 is shaped so that a channel 12 is formed therein, through which, e.g., air can be passed as a heat transport medium. In all the embodiments shown the carrier 1 can be obtained by appropriately processing plate-shaped material or by extruding, casting or a comparable technique.

Although it is possible with solar collectors to have a heat discharging plate itself perform an absorber function, e.g., by providing the plate with a spectroselective layer, this is so expensive that the use of a separate absorber layer is preferred. In such a case the construction according to the invention is appropriate, in which a movable elastic construction is held tightly between the absorber layer and the carrier without being bonded to these plates or layers. The construction shown in Fig. 1 can then be used with an absorber layer or absorber film instead of the glass plate 3 with solar cells 4. Another possibility is shown in Fig. 4. This variant comprises a carrier plate 1 shaped into a container by vertically flanging the edge 14. The end 15 of the vertical edge 14 is flanged in an outward horizontal direction. The thus formed container is provided with an amount of metal wool 16. The metal wool 16 is held tightly between the carrier 1 and the covering absorber film 17 which is folded at the ends 18 around the edge 15 of the carrier 1 with no bonding association between metal wool and any adjacent plate or film. Thus a proper heat transport from absorber film 17 and carrier 1 is ensured without any mechanical tension occurring owing to a difference in coeffient of expansion caused by the fact that the different layers can slightly move relatively to one another. Such a movement is of course also possible in the construction shown in Fig. 1, in which the plate 1, the spring plate 2 and the glass plate 3 are movable relatively to one another, because they are not bonded together.

Fig. 5 shows another embodiment of the collector according to the invention, e.g., appropriate for being directly applied to concrete roof constructions.

The embodiment shown comprises a carrier 1, the ends 10 of which are vertically flanged, so that, in a sense, a receptacle is formed in which the spring plate 2 resides. Superposed on the spring plate 2 is the glass plate 3 containing solar cells 4. The outer edges 19 of the ends 10 of the plate 5 are flanged in a horizontal outward direction. The liquid tube 5 is arranged underneath the carrier 1.

The whole collector package is laid on the concrete surface 20 provided with an appropriate slot or groove 21 for receiving the liquid tube 5. The concrete surface 20 may form part of, e.g., the roof of a house or another building. The collector package is held down to the surface 20 by a clamp 22 engaging the glass plate 3 of the package via an appropriate rubber strip 23. The clamp 22 is secured to the concrete surface 20 by means of a screw or rivet 24. In places where two collector packages are used side by side, the collector packages are appropriately held down by means of bolts 26 anchored or otherwise secured to the concrete surface and extending through a covering and clamping plate 25 pressed, via rubber strips 23, against the glass plates 3 of the collector packages arranged side by side. A nut 27 secures the clamping plate 25.

It will be clear that in all the embodiments shown glass covering plates may be used, if desired, to shelter the constructions from precipitation and the like. This is not shown in the Figures.

**Claim**

"A collector for collecting solar radiation, comprising a solar radiation absorber plate, a heat collecting carrier plate which is in heat conducting connection with the absorber plate and which is spaced apart from the absorber plate by means of an intermediate layer, and means for discharging heat from the carrier plate, characterized in that the intermediate layer forming the heat conducting connection between the absorber plate and the carrier plate is formed by an elastic and heat conducting construction consisting of metal springs or metal wool being moveably placed between the absorber plate and the carrier plate, and means are provided for holding together the absorber plate, the intermediate construction and the carrier plate and thereby fixing the intermediate construction in place in tight contact with the absorber plate and the carrier plate."

**Patentanspruch**

Solarkollektor mit einer Absorberplatte für die Solarstrahlung, einer wärmeaufnehmenden Trägerplatte, die in wärmeleitender Verbindung mit der Absorberplatte steht und die mittels einer Zwischenschicht im Abstand von der Absorberplatte gehalten ist, sowie mit Einrichtungen zur Ableitung der Wärme von der Trägerplatte, dadurch gekennzeichnet, daß die Zwischenschicht, die die Wärmeleitung zwischen der Absorberplatte und der Trägerplatte bewirkt, von einer elastischen, wärmeleitenden Anordnung aus metallischen Federn oder metallischer Wolle gebildet wird, die zwischen der Absorberplatte und der Trägerplatte verschiebbar angeordnet ist, und daß Einrichtungen vorgesehen sind, um die Absorberplatte, die zwischenliegende Anordnung und die Trägerplatte zusammenhalten und dadurch die zwischenliegende Anordnung an ihrem Platz und in festem Kontakt mit der Absorberplatte und der Trägerplatte halten.

**Revendication**

Collecteur du rayonnement solaire, comprenant une plaque absorbant le rayonnement du soleil, une plaque de support, collectrice de chaleur, qui est en connexion thermoconductrice avec la plaque d'absorption et qui est espacée de la plaque d'absorption au moyen d'une couche intermédiaire et un moyen pour décharger la chaleur de la plaque de support, caractérisé en ce que la couche intermédiaire formant la connexion thermoconductrice entre la plaque d'absorption et la plaque de support est formée d'une construction élastique et thermoconductrice, consistant en ressorts en métal ou laine métallique placée mobile entre la plaque d'absorption et la plaque de support, et des moyens sont prévus pour maintenir ensemble la plaque d'absorption, la construction intermédiaire et la plaque de support et ainsi maintenir la construction intermédiaire en place en contact serré avec la plaque d'absorption et la plaque de support.

FIG.1

FIG.2

FIG.4

FIG.3

FIG.5